# EUROPEAN PATENT APPLICATION

(11) **EP 2 489 584 A1**
(43) Date of publication of application: **22.08.2012**
(21) Application number: 11154650.3
(22) Date of filing: 16.02.2011
(51) Int. Cl.: B63B 21/20, B63B 21/04, F16G 11/00

(54) **Mooring line connector**

(71) Applicant: Morten Marine Design, 442 73 Kärna (SE)
(72) Inventor: Gundersen, Morten, SE-442 73, KÄRNA (SE)
(74) Representative: Friberg, Ingvar

(57) **Abstract**

A mooring line connector (1) for connecting mooring lines (2) for deep sea mooring of offshore platforms, the mooring lines having an eye (3) at their joining end, wherein the connector (1) comprises two spools (4) and two line loops (5) for connecting the two spools (4), wherein each of the spools (4) has an outer geometry suitable for receiving one mooring line (2) and the two line loops (5).

## Description

### TECHNICAL AREA

The present invention relates to a mooring line connector for connecting mooring lines for deep sea mooring of offshore platforms, the mooring lines having an eye at their joining end.

### BACKGROUND

With the gradual depletion of subterranean and shallow subsea hydrocarbon reservoirs, the search for additional petroleum reserves is being extended to deeper and deeper waters on the outer continental shelves of the world. As such deeper reservoirs are discovered; increasingly complex and sophisticated production systems have been developed for water depths of more than 2,000m.

At deep sea oil drilling and oil recovery operations the platforms used for these purposes are normally anchored to the sea bed. This is done by means of multiple sediment anchors, each connected to a mooring line of substantial length which is connected to the floating structure to keep it in position on the surface. Normally these lines are too long to be produced and/or handled in one length over all. Thus, they have to be joined together during the installation offshore.

Most mooring lines used at extended depths are today manufactured of synthetic material in order to be as light as possible since any weight of the mooring line and its connectors must be overcome by the buoyancy of the floating structure. However, the existing methods of joining the light synthetic ropes include the use of heavy steel connectors.

### SUMMARY OF THE INVENTION

The object of the present invention is therefore to provide a mooring line connector which is lighter compared to the presently available ones. This object is achieved by the invention set forth in the appended claims.

According to the present invention there is provided a mooring line connector for connecting mooring lines for deep sea mooring of offshore platforms. The mooring lines have an eye at their joining end. The connector further comprises two spools and two line loops for connecting the two spools, wherein each of the spools having an outer geometry suitable for receiving one mooring line and the two line loops.

According to one aspect of the invention the spools are cylindrical or non-cylindrical. Thus, if a more slender construction is desired it might be that the spools should for instance be oval. Since the spools are not meant to rotate a non-circular spool might require some sort of balancing device to keep the spool in the most advantageous position for strength reasons.

For optimizing or decreasing the weight of the mooring line connector, the two line loops can according to another aspect of the invention be fibre ropes. These can for instance be made from the same material as the mooring lines. As mentioned previously it is common that the mooring lines are synthetic ropes. However, apart from synthetic ropes it is also possible to use other types of fibre rope such as for instance carbon fibre ropes.

In order to minimize the weight an option is to have the spools made from a non-metallic material. An issue with some metals is also corrosion. Among several other materials a ceramic could be advantageous from both a corrosion point of view and a weight aspect, but also strength.

Also preferred is that the spools each have one groove for receiving the mooring line. The main advantage being that the mooring line is always in a specific position relative the spool which is important for being able to predict the load an ensuring the strength of the connector. In combination with this it is desired that the depth of groove is greater than the diameter of the mooring line. In this way the mooring line or at least the part in contact with the spool will be more protected from damage/wear. The profile of the bottom of the groove is preferably corresponding to the outer profile of the rope to be used in the groove.

Also, in a similar way as for the groove for the mooring line the spools preferably further comprise two grooves each on either side of the mooring line groove for receiving the line loops. For the same reason again the depth of the line loop grooves is preferably greater than the diameter of the line loops.

For facilitating handling of the spools, according to a further aspect of the invention the spools preferably have axial through holes. There could also be other types of holes or possibly hooks for using when handling the spools prior to their final working position.

According to yet another aspect the spools can be hollow in order to further decrease the weight. For some situations it might be interesting to have a spool, the buoyancy of which could be close to equal the gravity force.

To make sure that the line loops do not fall off from the spools it is desirable to have a mooring line connector further comprising two distance devices that in use each is arranged parallel and within a line loop and between the spools. For this to work properly it is advantageous that the ends of the distance devices are concave with a radius corresponding to the radius of the spools.

For facilitating the installation of the connectors, it is of advantage if the spools further comprise a device for securing the line loops, i.e. so that the line loops will not be lost or forgotten for example when handling the connector prior to intended use. This device could for instance be attached to the spools or the distance devices.

### BRIEF DESCRIPTION OF THE DRAWINGS

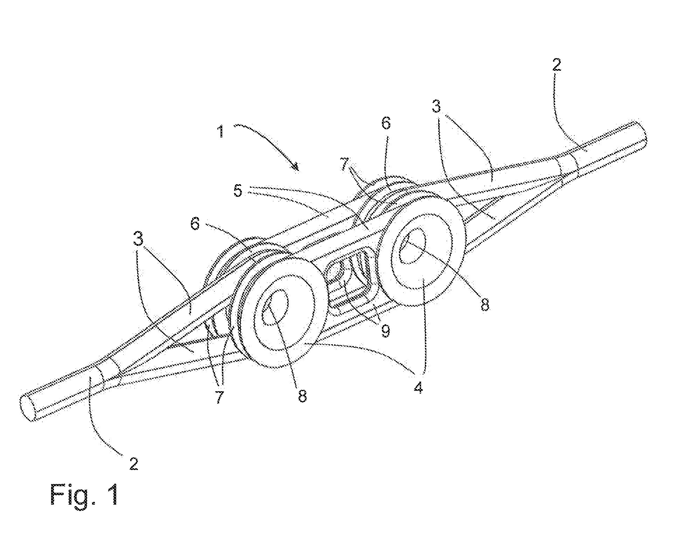

The mooring line connector according to the present invention is explained below in more detail with reference to figure 1 which shows a mooring line connector in final position connecting two mooring lines.

### DISCLOSURE OF PREFERRED EMBODIMENTS

The mooring line connector 1 according to the present invention will be explained with reference made to the enclosed figure. The examples are chosen in order to facilitate the reading and understanding of the present invention.

Figure 1 shows a mooring line connector 1 for connecting synthetic mooring lines 2 for deep sea mooring of offshore platforms. The mooring lines 2 have an eye 3 at their joining end. Further, the connector 1 comprises two spools 4 and two line loops 5 for connecting the two spools 4. Each of the spools 4 has an outer surface for receiving one mooring line 2 and the two line loops 5. The spools 4 are in the shown embodiment cylindrical. However, in an alternative embodiment the spools could be non-cylindrical.

The two line loops 5 are preferably synthetic ropes but other materials could be used as well, synthetic ropes being one of the light weight alternatives. To decrease the weight further spools 4 are preferably made of a non-metallic material.

As can be seen in figure 1, the spools 4 each have one groove 6 for receiving the mooring line. The depth of groove 6 is greater than the diameter of the mooring line 2 in order to protect the mooring line 2 from external objects. Also, the spools 4 further comprise two grooves 7 each on either side of the mooring line groove 6 for receiving the line loops 5. Similarly as with the mooring line groove 6, the depth of the line loop grooves 7 is greater than the diameter of the line loops 5.

The spools 4 have axial through holes 8. This serves at least two purposes, one being the low weight aspect and the other for facilitating handling. In order to decrease the weight of the spools even further the spools 4 could be made hollow.

In figure 1 the mooring line connector 1 is shown further comprising two distance devices 9. Each are arranged parallel and within a line loop 5 and between the spools 4. Instead of two devices a combination would be possible, i.e. one distance device serving both sides. As also can be seen from figure 1 the ends of the distance devices 9 are concave with a radius corresponding to the radius of the spools 4.

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, a distance device could instead be arranged at one side of both spools in order to both connect them and to hold them distanced apart. After installation a further device could be attached to the other side of the spools to have a more secure distancing of the spools.

## Claims

1. A mooring line connector (1) for connecting mooring lines (2) for deep sea mooring of offshore platforms, the mooring lines having an eye (3) at their joining end,
**characterised in**
the connector (1) comprises two spools (4) and two line loops (5) for connecting the two spools (4), wherein each of the spools (4) having an outer geometry suitable for receiving one mooring line (2) and the two line loops (5).

2. A mooring line connector (1) according to claim 1, wherein the spools (4) are cylindrical.

3. A mooring line connector (1) according to claim 1, wherein the spools are non-cylindrical.

4. A mooring line connector (1) according to any of the preceding claims,
wherein the two line loops (5) are fibre ropes.

5. A mooring line connector (1) according to any of the preceding claims,
wherein the spools (4) are made of a non-metallic material.

6. A mooring line connector (1) according to any of the preceding claims,
wherein the spools (4) each have one groove (6) for receiving the mooring line.

7. A mooring line connector (1) according to claim 6, wherein the depth of groove (6) is greater than the diameter of the mooring line (2).

8. A mooring line connector (1) according to claim 6 or 7, wherein the spools (4) further comprise two grooves (7) each on either side of the mooring line groove (6) for receiving the line loops (5).

9. A mooring line connector (1) according to claim 8, wherein the depth of
the line loop grooves (7) is greater than the diameter of the line loops (5).

10. A mooring line connector (1) according to any of the claims 1-9, wherein
the spools (4) have axial through holes (8).

11. A mooring line connector (1) according to any of the preceding claims,
wherein the spools (4) are hollow.

12. A mooring line connector (1) according to any of the preceding claims,
further comprising two distance devices (9) in use each arranged parallel and within a line loop (5) and between the spools (4).

13. A mooring line connector (1) according to claim 12, wherein the ends of
the distance devices (9) are concave with a radius corresponding to the radius of the spools (4).

14. A mooring line connector (1) according to any of the preceding claims,
wherein the spools (4) further comprises a device for securing the line loops (5).

15. A mooring line connector (1) according to any of the preceding claims,
wherein the two line loops (5) are synthetic ropes.
